# EUROPEAN PATENT APPLICATION

(11) **EP 4 481 845 A1**
(43) Date of publication of application: **25.12.2024**
(21) Application number: 23756272.3
(22) Date of filing: 09.02.2023
(51) Int. Cl.: H01M 4/133, H01M 4/134, H01M 4/36, H01M 4/38, H01M 4/48, H01M 4/587, H01M 10/0525, H01M 10/0566, H01M 10/0587, H01M 50/107

(54) **NON-AQUEOUS ELECTROLYTE SECONDARY BATTERY**

(30) Priority: 15.02.2022 JP 2022021097
(71) Applicant: Panasonic Energy Co., Ltd., Osaka 570-8511 (JP)
(72) Inventor: NAKADO, Hiroki, Kadoma-shi, Osaka 571-0057 (JP); TASHITA, Takamitsu, Kadoma-shi, Osaka 571-0057 (JP); KATOGI, Akihiro, Kadoma-shi, Osaka 571-0057 (JP)
(74) Representative: Novagraaf International SA
(86) International application number: PCT/JP2023/004312
(87) International publication number: WO 2023/157746

(57) **Abstract**

Provided is a non-aqueous electrolyte secondary battery having a high capacity and excellent rapid charge cycle characteristics. A non-aqueous electrolyte secondary battery according to an embodiment of the present disclosure comprises a winding-type electrode body, an electrolytic solution, and a cylindrical outer case body containing the electrode body and the electrolytic solution. The negative electrode has a negative electrode electric current collector, an inner winding side negative electrode mix layer formed on an inner winding side surface of the negative electrode electric current collector, and an outer winding side negative electrode mix layer formed on an outer winding side surface of the negative electrode electric current collector. The inner winding side negative electrode mix layer and the outer winding side negative electrode mix layer each has a first negative electrode mix layer facing the negative electrode electric current collector, and a second negative electrode mix layer facing the positive electrode. The first negative electrode mix layer includes graphite particles having an internal porosity of 6-20% and the second negative electrode mix layer includes graphite particles having an internal porosity of 5% or less. In the inner winding side negative electrode mix layer, the thickness t1 of the first negative electrode mix layer and the thickness t2 of the second negative electrode mix layer satisfy the relationship t1/t2 < 1.

## Description

### TECHNICAL FIELD

The present disclosure relates to a non-aqueous electrolyte secondary battery.

### BACKGROUND ART

From the viewpoint of higher capacity of non-aqueous electrolyte secondary batteries, non-aqueous electrolyte secondary batteries have been widely used as secondary batteries having a high energy density. As a negative electrode active material of the non-aqueous electrolyte secondary batteries, graphite is commonly used. Patent Literature 1 discloses art of distributing a large amount of graphite particles having a small internal porosity on a surface side of the negative electrode mixture layer. Patent Literature 1 describes that this art inhibits peeling of the graphite particles from a negative electrode current collector to improve high-speed charge cycle characteristics.

### CITATION LIST

### PATENT LITERATURE

PATENT LITERATURE 1: International Publication No. WO 2019/239652

### SUMMARY

The improvement of the high-speed charge cycle characteristics has been furthermore required in recent years against backgrounds of spread of electric vehicles, and the like. The present inventors have made intensive investigation, and consequently found that the high-speed charge cycle characteristics tend to be deteriorated due to charge-discharge reactions hardly proceed uniformly on an inner winding side and an outer winding side of a negative electrode in a wound electrode assembly. This is presumably because an amount of an electrolyte liquid held on the inner winding side of the negative electrode is smaller than an amount of an electrolyte liquid held on the outer winding side of the negative electrode. Patent Literature 1 does not investigate uniformization of the charge-discharge reactions on the inner winding side and the outer winding side, and still has room for improvement.

It is an advantage of the present disclosure to provide a non-aqueous electrolyte secondary battery having a high capacity and excellent high-speed charge cycle characteristics.

A non-aqueous electrolyte secondary battery of an aspect of the present disclosure comprises: an electrode assembly in which a positive electrode and a negative electrode are wound via a separator; an electrolyte liquid; and a cylindrical exterior that houses the electrode assembly and the electrolyte liquid, wherein the negative electrode has: a negative electrode current collector; an inner winding side negative electrode mixture layer formed on an inner winding side surface of the negative electrode current collector; and an outer winding side negative electrode mixture layer formed on an outer winding side surface of the negative electrode current collector, the inner winding side negative electrode mixture layer and the outer winding side negative electrode mixture layer each has a first negative electrode mixture layer facing the negative electrode current collector and a second negative electrode mixture layer facing the positive electrode, the first negative electrode mixture layer includes graphite particles having an internal porosity of greater than or equal to 6% and less than or equal to 20%, the second negative electrode mixture layer includes graphite particles having an internal porosity of less than or equal to 5%, and in the inner winding side negative electrode mixture layer, a thickness t1 of the first negative electrode mixture layer and a thickness t2 of the second negative electrode mixture layer satisfy t1/t2 < 1.

According to the non-aqueous electrolyte secondary battery of the present disclosure, the battery capacity and the high-speed charge cycle characteristics may be improved.

### BRIEF DESCRIPTION OF DRAWING

FIG. 1 is an axial sectional view of a cylindrical secondary battery of an example of an embodiment.
FIG. 2 is a sectional view of a negative electrode in an example of an embodiment.
FIG. 3 is a schematic view illustrating a cross section of graphite particles in an example of an embodiment.

### DESCRIPTION OF EMBODIMENTS

Hereinafter, an example of an embodiment of a cylindrical secondary battery according to the present disclosure will be described in detail with reference to the drawings. In the following description, specific shapes, materials, values, directions, and the like, which are examples for facilitating understanding of the present disclosure, may be appropriately modified with specifications of non-aqueous electrolyte secondary batteries. When a plurality of embodiments and modified examples are included in the following description, use in appropriate combination of characteristic portions thereof are anticipated in advance.

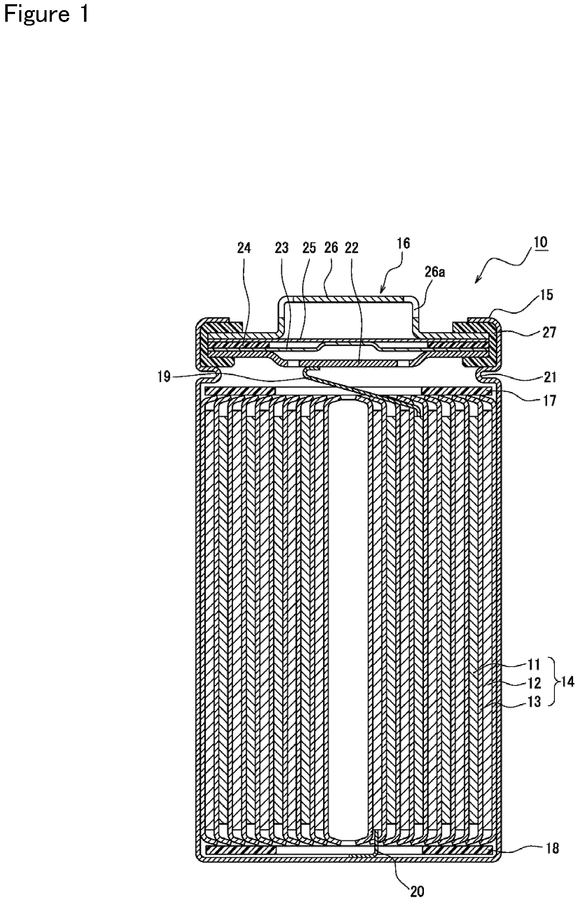

FIG. 1 is an axial sectional view of a cylindrical secondary battery 10 of an example of the embodiment. In the secondary battery 10 illustrated in FIG. 1, an electrode assembly 14 and a non-aqueous electrolyte (electrolyte liquid) are housed in an exterior 15. The electrode assembly 14 has a wound structure in which a positive electrode 11 and a negative electrode 12 are wound with a separator 13 interposed therebetween. The term "inner winding side" herein means a side of the winding center of the electrode assembly 14, and the term "outer winding side" means an outer circumferential side of the electrode assembly 14. Hereinafter, for convenience of description, a sealing assembly 16 side will be described as the "upper side", and the bottom side of the exterior 15 will be described as the "lower side".

An end of an opening of the exterior 15 is capped with the sealing assembly 16 to seal an inside of the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through a through hole of the insulating plate 18 toward the bottom side of the exterior 15, and is welded to a bottom inner face of the exterior 15. In the secondary battery 10, the exterior 15 becomes a negative electrode terminal. When the negative electrode lead 20 is provided on a terminal part, the negative electrode lead 20 extends through an outside of the insulating plate 18 toward a bottom side of the exterior 15, and welded with a bottom inner face of the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside. The grooved portion 21 is preferably formed in a circular shape along a circumferential direction of the exterior 15, and supports the sealing assembly 16 with the gasket 27 interposed therebetween and with the upper face of the grooved portion 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of middle portions thereof, and the insulating member 24 is interposed between circumferences thereof. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the positive electrode 11, the negative electrode 12, the separator 13 and the non-aqueous electrolyte, which constitute the secondary battery 10, particularly the negative electrode 12, will be described in detail.

### [Negative Electrode]

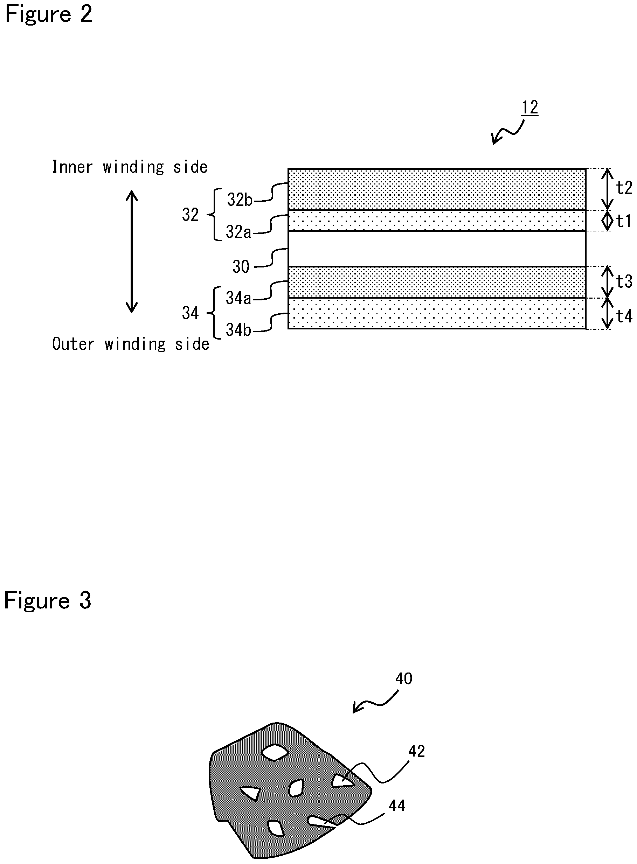

FIG. 2 is a sectional view of the negative electrode 12 of an example of an embodiment. As illustrated in FIG. 2, the negative electrode 12 has: a negative electrode current collector 30; an inner winding side negative electrode mixture layer 32 formed on an inner winding side surface of the negative electrode current collector 30; and an outer winding side negative electrode mixture layer 34 formed on an outer winding side surface of the negative electrode current collector 30. The inner winding side negative electrode mixture layer 32 has a first negative electrode mixture layer 32a facing the negative electrode current collector 30 and a second negative electrode mixture layer 32b facing the positive electrode 11. The outer winding side negative electrode mixture layer 34 has a first negative electrode mixture layer 34a facing the negative electrode current collector 30 and a second negative electrode mixture layer 34b facing the positive electrode 11.

For the negative electrode current collector 30, a foil of a metal stable within a potential range of the negative electrode, such as copper, a film in which such a metal is disposed on a surface layer, or the like is used. A thickness of the negative electrode current collector 30 is, for example, greater than or equal to 5 µm and less than or equal to 30 µm.

The inner winding side negative electrode mixture layer 32 and the outer winding side negative electrode mixture layer 34 include graphite particles 40 as a negative electrode active material. Examples of the graphite particles 40 may include natural graphite and artificial graphite. In terms of ease of regulating an internal porosity described later, the graphite particles 40 preferably include artificial graphite.

FIG. 3 is a schematic view illustrating a cross section of the graphite particles 40. As illustrated in FIG. 3, the graphite particles 40 have: closed gaps 42 unconnected from the particle inside to the particle surface (hereinafter, internal gaps 42); and gaps 44 connected from the particle inside to the particle surface (hereinafter, external gaps 44) in view of the cross section of the graphite particles 40.

A spacing of a (002) face (d₀₀₂) of the graphite particles 40 by an X-ray wide-angle diffraction method is preferably, for example, greater than or equal to 0.3354 nm, more preferably greater than or equal to 0.3357 nm, preferably less than 0.340 nm, and more preferably less than or equal to 0.338 nm. A crystallite size (Lc(002)) of the graphite particles 40 determined by an X-ray diffraction method is preferably, for example, greater than or equal to 5 nm, more preferably greater than or equal to 10 nm, preferably less than or equal to 300 nm, and more preferably less than or equal to 200 nm. The spacing (d₀₀₂) and the crystallite size (Lc(002)) satisfying the above ranges tend to increase the battery capacity compared with a case of not satisfying the above ranges.

The graphite particles 40 in the present embodiment include graphite particles having an internal porosity of greater than or equal to 6% and less than or equal to 20% (hereinafter, referred to as graphite particles A) and graphite particles having an internal porosity of less than or equal to 5% (hereinafter, referred to as graphite particles B). The internal porosity of the graphite particles A is greater than or equal to 6% and less than or equal to 20% in terms of inhibition of deterioration of the high-speed charge cycle characteristics, and the like, and preferably greater than or equal to 6% and less than or equal to 15%, and more preferably greater than or equal to 6% and less than or equal to 10%. The internal porosity of the graphite particles B is less than or equal to 5% in terms of inhibition of deterioration of the high-speed charge cycle characteristics, and the like, and preferably greater than or equal to 0.5% and less than or equal to 5%, and more preferably greater than or equal to 1% and less than or equal to 5%. Here, the internal porosity of the graphite particles is a two-dimensional value determined from a proportion of an area of the internal gaps 42 in the graphite particles relative to a sectional area of the graphite particles. The internal porosity of the graphite particles may be determined by the following procedure.

### <Method for Measuring Internal Porosity>

(1) A cross section of the negative electrode 12 is exposed. Examples of the method for exposing the cross section include a method of cutting a part of the negative electrode and processing the negative electrode with an ion-milling apparatus (for example, IM4000PLUS, manufactured by Hitachi High-Tech Corporation) to expose the cross section of the negative electrode 12.
(2) By using a scanning electron microscope, a backscattered electron image of the exposed cross section of the negative electrode 12 is photographed. The magnification with photographing the backscattered electron image is, for example, greater than or equal to 3,000 and less than or equal to 5,000.
(3) The sectional image obtained as above is imported into a computer, and subjected to a binarization processing by using an image analysis software (for example, ImageJ, available from National Institutes of Health). A binarization-processed image is obtained in which a particle cross section in the sectional image is converted in black and gaps present in the particle cross section are converted in white.
(4) The graphite particles A and B having a particle diameter of greater than or equal to 5 µm and less than or equal to 50 µm are selected from the binarization-processed image, and an area of a cross section of the graphite particles and an area of the internal gaps present in the cross section of the graphite particles are calculated. Here, the area of the cross section of the graphite particles refers to an area of a region surrounded by the outer circumference of the graphite particles, that is, an area of the entirety of the cross section of the graphite particles. Among the gaps present in the cross section of the graphite particles, a gap having a width of less than or equal to 3 µm may cause difficulty in judgement of whether the internal gap or the external gap on the image analysis, and thereby the gap having a width of less than or equal to 3 µm may be regarded as the internal gap. From the calculated area of the cross section of the graphite particles and the area of the internal gaps in the cross section of the graphite particles, the internal porosity of the graphite particles (the area of the internal gaps in the cross section of the graphite particles × 100 / the area of the cross section of the graphite particles) is calculated. The internal porosity of the graphite particles A and B is an average value of each 10 graphite particles A and B.

The graphite particles A may be produced as follows, for example. Cokes (precursor) being a main raw material is crushed into a predetermined size, the crushed product is aggregated with a binder, and then subjected to pressurizing molding to produce a block-shaped molded product. At this time, a density of the block-shaped molded product is, for example, greater than or equal to 1.6 g/cm³ and less than or equal to 1.9 g/cm³. Thereafter, this block-shaped molded product is calcined at a temperature of greater than or equal to 2600°C for graphitization. The block-shaped molded product after the graphitization is crushed and sieved to obtain graphite particles A having a desired size. Here, the internal porosity may be regulated to be greater than or equal to 6% and less than or equal to 20% with an amount of a volatile component added into the block-shaped molded product. When a part of the binder added into the cokes (precursor) is evaporated during the calcining, the binder may be used as the volatile component. Examples of such a binder include pitch.

The graphite particles B may be produced as follows, for example. Cokes (precursor) being a main raw material is crushed into a predetermined size, the crushed product is calcined and graphitized in an aggregated state with a binder at a temperature of greater than or equal to 2600°C and sieved to obtain the graphite particles B having a desired size. Here, the internal porosity may be regulated to be less than or equal to 5% with the particle diameter of the crushed precursor, the particle diameter of the precursor in the aggregated state, and the like. For example, increasing the particle diameter of the crushed precursor may reduce the internal porosity. The average particle diameter (median diameter in terms of volume, which may be referred to as D50 hereinafter) of the crushed precursor may be within a range of greater than or equal to 12 µm and less than or equal to 20 µm.

In the present embodiment, the first negative electrode mixture layers 32a and 34a (hereinafter, the first negative electrode mixture layers 32a and 34a may be collectively referred to as the first negative electrode mixture layer) include the graphite particles A, and the second negative electrode mixture layer 32b and 34b (hereinafter, the second negative electrode mixture layers 32b and 34b may be collectively referred to as the second negative electrode mixture layer) include the graphite particles B. In the inner winding side negative electrode mixture layer 32, a thickness t1 of the first negative electrode mixture layer 32a and a thickness t2 of the second negative electrode mixture layer 32b satisfy t1/t2 < 1. This may achieve both the increase in the capacity and the improvement of the high-speed charge cycle characteristics. The first negative electrode mixture layer including the graphite particles A may increase the battery capacity. On the inner winding side, setting the second negative electrode mixture layer 32b including the graphite particles B to be thicker than the first negative electrode mixture layer 32a may easily hold the electrolyte liquid. Note that the first negative electrode mixture layer may include graphite particles other than the graphite particles A, and the second negative electrode mixture layer may include graphite particles other than the graphite particles B.

The t1 and the t2 preferably satisfy 1/3 ≤ t1/t2 < 1, and more preferably satisfy 1/3 ≤ t1/t2 ≤ 9/11.

In the outer winding side negative electrode mixture layer 34, a thickness t3 of the first negative electrode mixture layer 34a and a thickness t4 of the second negative electrode mixture layer 34b preferably satisfy 1 ≤ t3/t4 ≤ 3. From the viewpoint of the increase in the capacity, a product of t1/t2 and t3/t4 is preferably 1.

Next, a method for forming the inner winding side negative electrode mixture layer 32 and the outer winding side negative electrode mixture layer 34 will be described. For example, a negative electrode active material including the graphite particles A, the binder, and a solvent such as water are firstly mixed to prepare a first negative electrode mixture slurry. Separately, a negative electrode active material including the graphite particles B, the binder, and a solvent such as water are mixed to prepare a second negative electrode mixture slurry. The first negative electrode mixture slurry is applied on both surfaces of a negative electrode current collector, dried, and then, on the coating of the first negative electrode mixture slurry, the second negative electrode mixture slurry is applied on both the surfaces, and dried. Further, the first negative electrode mixture layer and the second negative electrode mixture layer may be rolled with a roller to form the inner winding side negative electrode mixture layer 32 and the outer winding side negative electrode mixture layer 34. In the method, the first negative electrode mixture slurry is applied and dried, and then the second negative electrode mixture slurry is applied. However, the second negative electrode mixture slurry may be applied after the first negative electrode mixture slurry is applied and before dried. Alternatively, the first negative electrode mixture slurry may be applied, dried, and rolled, and then the second negative electrode mixture slurry may be applied on the first negative electrode mixture layer.

The first negative electrode mixture layer and the second negative electrode mixture layer may include, other than the graphite particles A and B used in the present embodiment, a negative electrode active material that may reversibly occlude and release lithium ions. For example, at least one of the first negative electrode mixture layer and the second negative electrode mixture layer may include a Si-based material. Since the Si-based material may occlude a large amount of lithium ions compared with graphite, the battery may have a larger capacity. Examples of the Si-based material may include: Si; an alloy including Si; a Si oxide represented by SiOₓ (0.5 ≤ x ≤ 1.6); a Si-containing material in which Si fine particles are dispersed in a lithium silicate phase represented by Li_{2y}SiO_{(2+y)} (0 < y < 2); and a Si-containing material in which Si fine particles are dispersed in a carbon phase. The Si-based material preferably includes SiOₓ (0.5 ≤ x ≤ 1.6). In the first negative electrode mixture layer and the second negative electrode mixture layer, a proportion of the Si-based material relative to the total mass of the negative electrode active material is preferably greater than or equal to 1 mass% and less than or equal to 10 mass%, and more preferably greater than or equal to 3 mass% and less than or equal to 7 mass% from the viewpoints of the improvement of the battery capacity, the inhibition of deterioration of the charge-discharge cycle characteristics, and the like.

The first negative electrode mixture layer and the second negative electrode mixture layer may further include a binder. Examples of the binder include a fluororesin, a polyimide resin, an acrylic resin, a polyolefin resin, polyacrylonitrile (PAN), styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used singly, or in combination of two or more thereof.

The first negative electrode mixture layer and the second negative electrode mixture layer may further include a conductive agent. Examples of the conductive agent include carbon-based particles such as carbon black (CB), acetylene black (AB), Ketjenblack, carbon nanotube (CNT), graphene, and graphite. These may be used singly, or in combination of two or more.

### [Positive Electrode]

The positive electrode 11 is composed of, for example, a positive electrode current collector such as metal foil and a positive electrode mixture layer formed on the positive electrode current collector. For the positive electrode current collector, a foil of a metal stable within a potential range of the positive electrode, such as aluminum, a film in which such a metal is disposed on a surface layer, or the like may be used. The positive electrode mixture layer includes, for example, a positive electrode active material, a binder, a conductive agent, and the like. The positive electrode 11 may be produced by, for example, applying a positive electrode mixture slurry including the positive electrode active material, the binder, the conductive agent, and the like on the positive electrode current collector, drying the coating to form the positive electrode mixture layer, and then rolling this positive electrode mixture layer.

Examples of the positive electrode active material may include a lithium-transition metal oxide containing a transition metal element such as Co, Mn, and Ni. The lithium-transition metal oxide is, for example, LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly, or as a mixture thereof. In terms of attempting a higher capacity of the non-aqueous electrolyte secondary battery, the positive electrode active material preferably includes a lithium-nickel composite oxide such as LiₓNiO₂, LiₓCo_{y}Ni_{1-y}O₂, and LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3).

Examples of the conductive agent include carbon-based particles such as carbon black (CB), acetylene black (AB), Ketjenblack, carbon nanotube (CNT), graphene, and graphite. These may be used singly, or in combination of two or more.

Examples of the binder include fluororesins such as polytetrafluoroethylene (PTFE) and polyvinylidene fluoride (PVdF), polyimide resins, acrylic resins, polyolefin resins, and polyacrylonitrile (PAN). These may be used singly, or in combination of two or more.

### [Separator]

For the separator 13, a porous sheet having an ion permeation property and an insulation property is used, for example. Specific examples of the porous sheet include a fine porous thin film, a woven fabric, and a nonwoven fabric. As a material for the separator, olefin resins such as polyethylene or polypropylene, cellulose, or the like is preferable. The separator 13 may be a laminate having a cellulose fiber layer and a thermoplastic resin fiber layer such as an olefin resin. The separator 13 may be a multilayer separator including a polyethylene layer and a polypropylene layer, or a separator in which a material such as an aramid resin and a ceramic is applied on a surface of the separator 13 may also be used.

### [Non-Aqueous Electrolyte]

The non-aqueous electrolyte is a liquid electrolyte (electrolyte liquid) including a non-aqueous solvent and an electrolyte salt dissolved in the non-aqueous solvent. For the non-aqueous solvent, any of esters, ethers, nitriles such as acetonitrile, and amides such as dimethylformamide, a mixed solvent of two or more thereof, or the like may be used, for example. The non-aqueous solvents may contain a halogen-substituted derivative in which the hydrogen of these solvents is at least partially replaced with a halogen atom such as fluorine.

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone and γ-valerolactone; and chain carboxylates such as methyl acetate, ethyl acetate, propyl acetate, methyl propionate (MP), and ethyl propionate.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen-substituted derivative, fluorinated cyclic carbonates such as fluoroethylene carbonate (FEC), fluorinated chain carbonates, and fluorinated chain carboxylates such as methyl fluoropropionate (FMP) are preferably used.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {l and m represent integers of 1 or more}. These lithium salts may be used singly, or as a mixture thereof. Among them, LiPF₆ is preferably used from the viewpoints of ion conductivity, electrochemical stability, and the like. A concentration of the lithium salt is preferably, greater than or equal to 0.8 mol and less than or equal to 1.8 mol per litter of the solvent.

### EXAMPLES

Hereinafter, the present disclosure will be further described with Examples, but the present disclosure is not limited to these Examples.

### <Example 1>

### [Production of Positive Electrode]

As a positive electrode active material, a particle lithium-transition metal oxide represented by LiCo_{0.979}Zr_{0.001}Mg_{0.01}Al_{0.01}O₂ was used. Mixing 95 parts by mass of the positive electrode active material, 2.5 parts by mass of acetylene black (AB) as a conductive agent, and 2.5 parts by mass of a polyvinylidene fluoride powder as a binder was performed, and an appropriate amount of N-methyl-2-pyrrolidone (NMP) was further added to prepare a positive electrode mixture slurry. This slurry was applied on both surfaces of a positive electrode current collector composed of aluminum foil (thickness: 15 µm) with a doctor blade method, the coating was dried, and then the coating was rolled with a roller to produce a positive electrode in which a positive electrode mixture layer was formed on both the surfaces of the positive electrode current collector.

### [Production of Graphite Particles A]

Cokes was crushed until the average particle diameter (D50) was 15 µm, and pitch as a binder was added into the crushed cokes to aggregate the cokes. An isotropic pressure was applied to this aggregate to produce a block-shaped molded product having a density of 1.8 g/cm³. This block-shaped molded product was calcined at a temperature of 2800°C for graphitization, then the graphitized block-shaped molded product was crushed, and sieved by using a sieve with 250 mesh to obtain graphite particles A having an average particle diameter (D50) of 23 µm.

### [Production of Graphite Particles B]

Cokes was crushed until the average particle diameter (D50) was 12 µm, and pitch as a binder was added into the crushed cokes to aggregate the cokes until the average particle diameter (D50) was 17 µm. This aggregate was calcined at a temperature of 2800°C for graphitization. Then, the graphitized block-shaped molded product was crushed, and sieved by using a sieve with 250 mesh to obtain graphite particles B having an average particle diameter (D50) of 23 µm.

### [Production of Negative Electrode]

The graphite particles A and SiO were mixed at a mass ratio of 95:5 to prepare a first negative electrode active material. Mixing 100 parts by mass of the first negative electrode active material, 1 part by mass of carboxymethylcellulose (CMC), and 1 part by mass of styrene-butadiene copolymer rubber (SBR) was performed, and this mixture was kneaded in water to prepare a first negative electrode mixture slurry.

The graphite particles B was mixed with SiO at a mass ratio of 95:5 to prepare a second negative electrode active material. Mixing 100 parts by mass of the second negative electrode active material, 1 part by mass of CMC, and 1 part by mass of SBR was performed, and this mixture was kneaded in water to prepare a second negative electrode mixture slurry.

The first negative electrode mixture slurry was applied on both surfaces of a negative electrode current collector composed of copper foil with a doctor blade method, and dried to form a first negative electrode mixture layer. On the first negative electrode mixture layer, the above second negative electrode mixture slurry was applied and dried to form a second negative electrode mixture layer. At this time, an applied mass ratio per unit area between the first negative electrode mixture slurry and the second negative electrode mixture slurry was 45:55 on the inner winding side and 55:45 on the outer winding side. On the inner winding side and the outer winding side, totals of the applied masses per unit area of the first negative electrode mixture slurry and the second negative electrode mixture slurry were set to be substantially equal. The first negative electrode mixture layer and the second negative electrode mixture layer were rolled with a roller to produce a negative electrode. After the rolling, t1/t2 was 9/11, and t3/t4 was 11/9. In the produced negative electrode, the internal porosities of the graphite particles A and the graphite particles B were measured to find 8% and 3% respectively.

### [Production of Non-Aqueous Electrolyte Secondary Battery]

(1) A positive electrode lead was attached to the positive electrode current collector, a negative electrode lead was attached to the negative electrode current collector, and then the positive electrode and the negative electrode were wound via a separator composed of a fine porous film made of polyethylene to produce a wound electrode assembly.
(2) Insulating plates were disposed on upper and lower sides of the electrode assembly respectively, the negative electrode lead was welded with the case body, the positive electrode lead was welded with a sealing assembly, and the electrode assembly was housed in the case body.
(3) The non-aqueous electrolyte was injected inside the case body by a pressure reducing method, and then an opening of the case body was sealed with the sealing assembly via a gasket. This was used as a non-aqueous electrolyte secondary battery.

### <Example 2>

A test cell was produced in the same manner as in Example 1 except that, in the production of the negative electrode, the applied mass ratios per unit area of the first negative electrode mixture slurry and the second negative electrode mixture slurry was regulated to 40:60 on the inner winding side and 60:40 on the outer winding side. After the rolling, t1/t2 was 2/3, and t3/t4 was 3/2.

### <Example 3>

A test cell was produced in the same manner as in Example 1 except that, in the production of the negative electrode, the applied mass ratios per unit area of the first negative electrode mixture slurry and the second negative electrode mixture slurry was regulated to 30:70 on the inner winding side and 70:30 on the outer winding side. After the rolling, t1/t2 was 3/7, and t3/t4 was 7/3.

### <Example 4>

A test cell was produced in the same manner as in Example 1 except that, in the production of the negative electrode, the applied mass ratios per unit area of the first negative electrode mixture slurry and the second negative electrode mixture slurry was regulated to 25:75 on the inner winding side and 75:25 on the outer winding side. After the rolling, t1/t2 was 1/3, and t3/t4 was 3.

### <Example 5>

A test cell was produced in the same manner as in Example 1 except that, in the production of the negative electrode, the applied mass ratios per unit area of the first negative electrode mixture slurry and the second negative electrode mixture slurry was regulated to 40:60 on the inner winding side and 50:50 on the outer winding side. After the rolling, t1/t2 was 2/3, and t3/t4 was 1.

### <Comparative Example 1>

A test cell was produced in the same manner as in Example 1 except that, in the production of the negative electrode, the graphite particles A were used instead of the graphite particles B in preparing the second negative electrode mixture slurry, and the applied mass ratios per unit area of the first negative electrode mixture slurry and the second negative electrode mixture slurry was regulated to 50:50 on the inner winding side and the outer winding side. After the rolling, t1/t2 and t3/t4 were both 1.

### <Comparative Example 2>

A test cell was produced in the same manner as in Example 1 except that, in the production of the negative electrode, the applied mass ratios per unit area of the first negative electrode mixture slurry and the second negative electrode mixture slurry was regulated to 50:50 on the inner winding side and the outer winding side. After the rolling, t1/t2 and t3/t4 were both 1.

### [Evaluation of Capacity Retention]

Under an environment temperature of 25°C, the test cell of each of Examples and each of Comparative Examples was charged at a constant current of 1 It until 4.2 V, and then charged at a constant voltage of 4.2 V until 1/20 It. Thereafter, the test cell was discharged at a constant current of 1 It until 2.75 V. This charge and discharge was specified as one cycle, and 300 cycles were performed. A capacity retention in the charge-discharge cycle of the test cell of each of Examples and each of Comparative Examples was determined with the following formula. Capacity retention = (Discharge capacity at 300th cycle / Discharge capacity at 1st cycle) × 100

Table 1 summarizes the evaluation results of the capacity retention of the test cell of each of Examples and each of Comparative Examples. Table 1 also shows the internal porosity of the graphite particles included in the first negative electrode mixture layer and the second negative electrode mixture layer, and the thickness ratios (t1/t2 and t3/t4) of the first negative electrode mixture layer and the second negative electrode mixture layer on the inner winding side and the outer winding side.

**[Table 1]**

| | Internal porosity of graphite particles [%] | | Thickness ratio between first layer and second layer | | Capacity retention [%] |
|---|---|---|---|---|---|
| | First layer | Second layer | Inner winding side (t1/t2) | Outer winding side (t3/t4) | |
| Example 1 | 8 | 3 | 9/11 | 11/9 | 77 |
| Example 2 | 8 | 3 | 2/3 | 3/2 | 80 |
| Example 3 | 8 | 3 | 3/7 | 7/3 | 80 |
| Example 4 | 8 | 3 | 1/3 | 3 | 77 |
| Example 5 | 8 | 3 | 2/3 | 1 | 80 |
| Comparative Example 1 | 8 | 8 | 1 | 1 | 71 |
| Comparative Example 2 | 8 | 3 | 1 | 1 | 75 |

| | | | | | |
|---|---|---|---|---|---|
| Second layer: second negative electrode mixture layer, First layer: first negative el ectrode mixture layer | | | | | |

The batteries of Examples have improved capacity retention compared with the batteries of Comparative Examples. In the batteries of Examples, it was considered that the capacity retention was improved because the charge-discharge reactions on the inner winding side and the outer winding side were uniformized by forming the negative electrode mixture layer having the predetermined constitution on the inner winding side and the outer winding side of the negative electrode current collector. From the viewpoint of the battery capacity, Examples 1 to 4 are preferred to Example 5.

### REFERENCE SIGNS LIST

10 Secondary battery, 11 Positive electrode, 12 Negative electrode, 13 Separator, 14 Electrode assembly, 15 Exterior, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening, 27 Gasket, 30 Negative electrode current collector, 32 Inner winding side negative electrode mixture layer, 34 Outer winding side negative electrode mixture layer, 32a, 34a First negative electrode mixture layer, 32b, 34b Second negative electrode mixture layer, 40 Graphite particle, 42 Internal gap, 44 External gap

## Claims

1. A non-aqueous electrolyte secondary battery, comprising:
an electrode assembly in which a positive electrode and a negative electrode are wound via a separator;
an electrolyte liquid; and
a cylindrical exterior that houses the electrode assembly and the electrolyte liquid, wherein
the negative electrode has: a negative electrode current collector; an inner winding side negative electrode mixture layer formed on an inner winding side surface of the negative electrode current collector; and an outer winding side negative electrode mixture layer formed on an outer winding side surface of the negative electrode current collector,
the inner winding side negative electrode mixture layer and the outer winding side negative electrode mixture layer each has a first negative electrode mixture layer facing the negative electrode current collector and a second negative electrode mixture layer facing the positive electrode,
the first negative electrode mixture layer includes graphite particles having an internal porosity of greater than or equal to 6% and less than or equal to 20%,
the second negative electrode mixture layer includes graphite particles having an internal porosity of less than or equal to 5%, and
in the inner winding side negative electrode mixture layer, a thickness t1 of the first negative electrode mixture layer and a thickness t2 of the second negative electrode mixture layer satisfy t1/t2 < 1.

2. The non-aqueous electrolyte secondary battery according to claim 1, wherein, in the outer winding side negative electrode mixture layer, a thickness t3 of the first negative electrode mixture layer and a thickness t4 of the second negative electrode mixture layer satisfy 1 ≤ t3/t4 ≤ 3.

3. The non-aqueous electrolyte secondary battery according to claim 1 or 2, wherein the t1 and the t2 satisfy 1/3 ≤ t1/t2 < 1.

4. The non-aqueous electrolyte secondary battery according to any one of claims 1 to 3, wherein at least one of the first negative electrode mixture layer and the second negative electrode mixture layer includes a Si-based material.
